# FASCICULE DE BREVET EUROPEEN

(11) **EP 4 596 270 B1**
(45) Date de publication et mention de la délivrance du brevet: **11.11.2026**
(21) Numéro de dépôt: 25154719.6
(22) Date de dépôt: 29.01.2025
(51) Int. Cl.: B60G 21/055, B60G 11/60

(54) **TRAIN DE ROUE DE VÉHICULE AUTOMOBILE**
RADAUFHÄNGUNG EINES KRAFTFAHRZEUGS
WHEEL SUSPENSION FOR A MOTOR VEHICLE

(30) Priorité: 31.01.2024 FR 2400938
(43) Date de publication de la demande: 06.08.2025
(73) Titulaire: Renault s.a.s, 92100 Boulogne Billancourt (FR)
(72) Inventeur: DEVALETTE, Silvere, 78280 GUYANCOURT (FR)

(56) Documents cités:
- DE-A1- 102005 001 827
- DE-A1- 19 702 241

## Description

La présente invention se rapporte à un train de roue de véhicule automobile avant ou arrière.

Un domaine d'application envisagé est notamment, celui des trains de véhicule automobile à quatre roues motrices. Ce type de véhicule est non seulement adapté pour circuler sur les routes, mais aussi en dehors, sur des terrains plus ou moins accidentés.

Aussi, les véhicules de ce type comprennent un train de roue avant et un train de roue arrière motorisés.

Les trains de roue comprennent chacun un berceau présentant deux extrémités opposées et deux supports de roue respectivement reliés aux deux extrémités du berceau par des bras de suspension. Les deux supports de roue sont respectivement surmontés de deux jambes de force, sur lesquelles vient s'appuyer la caisse de carrosserie du véhicule automobile. Les jambes de force sont compressibles axialement et elles comprennent un ressort de rappel et un système d'amortissement. En outre, le train de roue comprend également une barre de torsion qui relie les bras de suspension opposés ou bien les deux jambes de force. Elle vise notamment à limiter le roulis du véhicule lorsqu'il est en mouvement. Elle est couramment dénommée « barre anti-roulis ».

Aussi, les jambes de force comportent une « butée de choc », laquelle comprend un organe élastiquement déformable, qui vient absorber l'énergie en fin de course de compression de la jambe de force. Ainsi, la « butée de choc », permet de limiter la course de la jambe de force lors des chocs, par exemple sur une route dégradée, où la roue du véhicule vient à l'aplomb d'un trou, ou bien à l'inverse lorsque le véhicule franchit un dos d'âne.

Partant, les « butées de choc » viennent limiter l'amplitude de débattement des roues, et ainsi, elles permettent de préserver les éléments de la suspension. Mais en contrepartie, les capacités de croisement de pont des véhicules sont limitées, ce qui obère les possibilités du véhicule d'évoluer sur des terrains accidentés.

Le document DE 10 2005 001827 A1 présente un train de roue de véhicule automobile, tel que décrit dans le préambule de la revendication 1. Il présente un ressort de torsion doté d'un système de rigidité variable.

Aussi, un problème qui se pose et que vise à résoudre la présente invention est de fournir des trains de roue dont les éléments de suspension sont préservés, mais aussi, dont les capacités de croisement de pont sont suffisantes pour que le véhicule puisse évoluer sur des terrains difficiles et accidentés.

Dans le but de résoudre ce problème, et selon un premier objet, il est proposé un train de roue de véhicule automobile comprenant : un berceau présentant deux extrémités de berceau opposées ; deux supports de roue respectivement reliés auxdites deux extrémités de berceau et adaptés à recevoir chacun une roue ; deux jambes de force surmontant respectivement lesdits deux supports de roue et adaptées à être comprimées lorsque lesdits support de roue sont entraînés en mouvement par rapport audit berceau ; une barre de torsion présentant une partie médiane rectiligne et deux extrémités de barre opposées coudées et symétriques l'une de l'autre, ladite partie médiane étant installée mobile en rotation le long de dudit berceau, tandis que lesdites deux extrémités de barre opposées sont respectivement reliées auxdites jambes de force.

Ledit berceau comprend en outre un organe de rappel élastique situé entre lesdites deux extrémités de berceau ; et ladite partie médiane de ladite barre de torsion comprend une patte adaptée à coopérer avec ledit organe de rappel élastique pour amortir le mouvement simultané desdits supports de roue par rapport audit berceau. Ainsi, une caractéristique de l'invention réside dans la mise en œuvre d'un organe de rappel élastique sur le berceau et d'une patte solidaire de la barre de torsion, laquelle patte vient coopérer avec l'organe de rappel élastique. De la sorte, l'organe de rappel élastique joue le rôle des « butées de choc » en venant limiter la rotation de la barre de torsion. En conséquence, on peut s'affranchir des « butées de choc » sur les jambes de force et obtenir alors un débattement plus important des roues, et partant, des capacités de croisement de pont plus importante.

On observera que lorsque le véhicule évolue en terrain accidenté, et en particulier dans les situations de croisement de pont, l'une des extrémités de la barre de torsion est entraînée vers le haut, tandis que l'autre est entraînée vers le bas, et en conséquence, la zone de la partie médiane accueillant la patte, demeure immobile. En revanche, lorsque le véhicule évolue sur une route et qu'il rencontre par exemple un dos d'âne, les deux extrémités de la barre de torsion sont sollicitées dans le même sens et par conséquent, la patte vient en appui contre organe de rappel élastique. Et ce dernier joue alors le rôle des limitations de débattement vertical de type « butées de choc » classiques.

Avantageusement, et selon l'invention, les jambes de force sont respectivement équipées en surplus de « butées de choc » raccourcies. Ces « butées de choc » plus courtes permettent de limiter le débattement extrême des roues lors d'un choc dissymétrique ne sollicitant que partiellement l'organe de rappel élastique, sans toutefois obérer l'amplitude maximale de débattement des roues.

Selon un mode préféré de mise en œuvre de l'invention, ledit organe de rappel élastique est situé sensiblement à équidistance desdites deux extrémités de poutre. Et au surplus, la patte de la barre de torsion est située sensiblement à équidistance de ses deux extrémités et elle vient alors en appui sur l'organe de rappel élastique. Avantageusement, et selon l'invention, ledit berceau est équipé de deux paliers espacés l'un de l'autre pour recevoir ladite partie médiane de ladite barre de torsion. Ainsi, les deux paliers sont installés coaxialement sur le berceau et les deux extrémités de la partie médiane de la barre de torsion, laquelle partie médiane est rectiligne, sont montées à rotation respectivement dans les deux paliers.

Selon un mode de mise en œuvre de l'invention, particulièrement avantageux, ledit berceau est creux pour recevoir ledit organe de rappel élastique, et présente en outre une ouverture au droit dudit organe de rappel élastique pour autoriser le passage de ladite patte. De la sorte, l'organe de rappel élastique est installé dans un volume mort du berceau, et par conséquent, son installation n'engendre pas de modification de position des éléments des train de roue usuels.

Aussi, selon l'invention, chacune desdites deux extrémités de barre opposées présente une première portion coudée par rapport à ladite partie médiane et une seconde portion coudée par rapport à ladite première portion en formant manivelle. Partant, la seconde portion coudée est reliée à la jambe de force correspondante par l'intermédiaire d'une biellette. En conséquence, le mouvement de la jambe de force est adapté à provoquer le mouvement de la seconde portion coudée qui imprime alors un couple de rotation sur la partie médiane de la barre de torsion.

De plus, selon l'invention, chacune des premières portions est courbée dans un plan sensiblement perpendiculaire à ladite partie médiane. De la sorte, les extrémités de la barre de torsion sont sensiblement plus longues et elles offrent ainsi plus de flexibilité. Autrement dit, leur capacité de flambage est accrue.

En outre, conformément à l'invention, lesdits deux supports de roue sont respectivement reliés auxdites deux extrémités de berceau par des bras de suspensions. Les bras de suspension sont montés pivotants à la fois sur les extrémités de berceau, et aussi sur les supports de roue. De la sorte, les roues peuvent osciller par rapport au berceau en demeurant verticales.

Selon un autre objet de l'invention, il est proposé un véhicule automobile présentant une partie avant et une partie arrière, et chacune desdites parties avant et arrière est équipée d'un train de roue tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique de face d'un train de roue au repos conforme à l'invention ;
[Fig. 2] est une vue schématique de dessus d'un train de roue conforme à l'invention ;
[Fig. 3] est une vue schématique en perspective de trois quarts arrière du train de roue coupé selon le plan médian III - III illustré sur la [Fig. 1] ; et,
[Fig. 4] est une vue schématique de face du train de roue représenté sur la [Fig. 1] dans une position de travail.

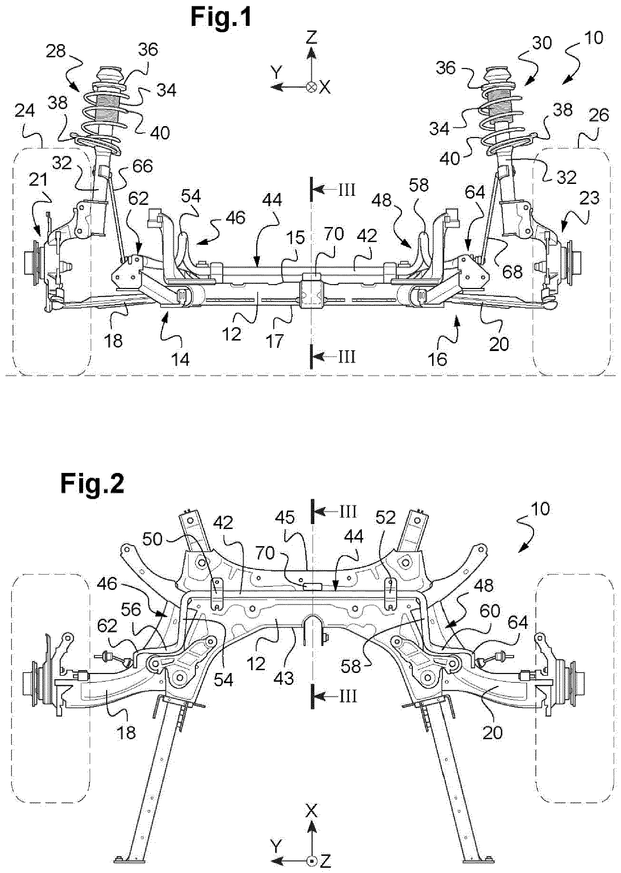

La [Fig. 1] montre de face, un train de roue avant 10 de véhicule automobile. Toutefois, l'invention est également adaptée à un train de roue arrière de véhicule.

Le train de roue avant 10 s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite lorsque l'on est en situation de roulage ; et l'axe Z s'étend selon une direction verticale, orienté à l'opposé du sol.

Le train de roue avant 10 comprend tout d'abord un berceau 12 s'étendant transversalement selon la direction Y. Le berceau 12 est creux et il présente une extrémité droite 14 opposée à une extrémité gauche 16. Il présente également une paroi supérieure 15 opposée à une paroi inférieure 17.

Aussi, le train de roue 10 comporte un bras inférieur droit 18 monté articulé sur l'extrémité droite 14, et un bras inférieur gauche 20 monté articulé sur l'extrémité gauche 16 du berceau 12.

L'extrémité du bras inférieur droit 18 est montée articulée sur un support de roue droit 21, et à l'opposé, l'extrémité du bras inférieur gauche 20 est montée articulée sur un support de roue gauche 23.

Aussi, on a représenté en trait interrompu, une roue droite 24 installée sur le support de roue droit 21 et une roue gauche 26 installée sur le support de roue gauche 23. Les supports de roue 21, 23 sont alors surmontés respectivement d'une jambe de force droite 28 et d'une jambe de force gauche 30.

Les différents éléments des jambes de force 28, 30 présentent les mêmes références car ils sont identiques et ils ont exactement les mêmes fonctions.

Chacune des jambes de force comprend un cylindre 32 directement solidaire des supports de roue 21, 23 dans lequel vient coulisser au moins un piston relié à une tige, lesquels ne sont pas représentés. La tige et l'entrée du cylindre 32 sont préservées par un soufflé 34. La tige vient en appui contre une coupelle supérieure 36. Selon un mode de mise en œuvre de l'invention, des pièces en élastomère de faible épaisseur sont interposées entre la coupelle supérieure 36 et l'extrémité de la tige pour former des « butées de choc » plus courtes que celles mises en œuvre dans les jambes de force selon l'art antérieur.

Aussi, chaque cylindre 32 est muni d'une coupelle inférieure 38 et un ressort hélicoïdal 40 vient en prise entre la coupelle inférieure 38 et de coupelle supérieure 36.

Ainsi, la caisse de carrosserie du véhicule automobile, non représentée, vient en appui sur les coupelles supérieures 36. Partant, lorsque le véhicule est en roulement, les deux jambes de force 28, 30 sont adaptées à se comprimer axialement, et à se relâcher, selon la composante verticale Z, et à osciller autour de leur position d'équilibre. Le piston et la tige en mouvement à l'intérieur du cylindre 32, sont adaptés précisément à amortir ces oscillations.

En outre, le train de roue 10 comporte une barre de torsion 42 s'étendant transversalement le long du berceau 12. Elle est réalisée en acier. Aussi, elle présente une section sensiblement circulaire comprise entre 4 cm de diamètre 6 cm de diamètre par exemple.

On retrouve sur la [Fig. 2] le train de roue avant 10 débarrassé de ses jambes de force. On y retrouve ainsi le berceau 12. Il présente une paroi antérieure 43 opposée à une paroi postérieure 45. Aussi, on y voit plus en détail la barre de torsion 42, laquelle présente une partie médiane rectiligne 44 et une extrémité de barre droite 46 symétrique d'une extrémité de barre gauche 48 par rapport au plan médian III - III.

La partie médiane est montée à rotation dans deux paliers 50, 52 écartés l'un de l'autre et montés sur la paroi supérieure 15 du berceau 12, de façon que la partie médiane 44 s'étende transversalement selon la direction Y.

En outre, l'extrémité de barre droite 46 présente une première portion droite 54 coudée vers l'avant du véhicule selon la direction -X, et sensiblement à angle droit par rapport à la partie médiane 44, et une seconde portion droite 56 prolongeant la première portion 54 et coudée en retour selon un angle droit par rapport à la première portion 54. La seconde portion 56 s'étend ainsi dans une direction sensiblement parallèle à la partie médiane 44 en formant manivelle.

De la même façon, à l'opposé, l'extrémité de barre gauche 48 présente une première portion gauche 58 coudée vers l'avant du véhicule sensiblement parallèlement à la première portion 54, et sensiblement à angle droit par rapport à la partie médiane 44, et une seconde portion gauche 60 prolongeant la première portion 58 et coudée en retour selon un angle droit par rapport à la première portion 58. La seconde portion 60 s'étend dans une direction sensiblement parallèle à la partie médiane 44 en formant également manivelle.

Aussi, la seconde portion droite 56 de l'extrémité de barre droite 46 se termine par une extrémité libre droite 62, tandis qu'à l'opposé, la seconde portion gauche 60 de l'extrémité de barre gauche 48 se termine par une extrémité libre gauche 64.

Sur la [Fig. 1], on observera que la première portion droite 54 de l'extrémité de barre droite 46 et la première portion gauche 58 de l'extrémité de barre gauche 48 forment sensiblement un arc de cercle. Cet arc de cercle définit un plan sensiblement perpendiculaire à la partie médiane 44 de la barre de torsion 42. Aussi, la partie concave de cet arc de cercle est orientée vers le berceau 12.

On retrouve également sur la [Fig. 1], les deux extrémités libres, droite 62, et gauche 64 des secondes portions droites 56 et gauche 60 des extrémités respectives 46, 48 de la barre de torsion 42.

Aussi, l'extrémité libre droite 62 est reliée au cylindre 32 de la jambe de force droite 28 par l'intermédiaire d'une biellette droite 66, tandis que l'extrémité libre gauche 64 est reliée au cylindre 32 de la jambe de force gauche 30 par l'intermédiaire d'une biellette gauche 68. Ces deux biellettes 66, 68 s'étendent selon une composante verticale Z.

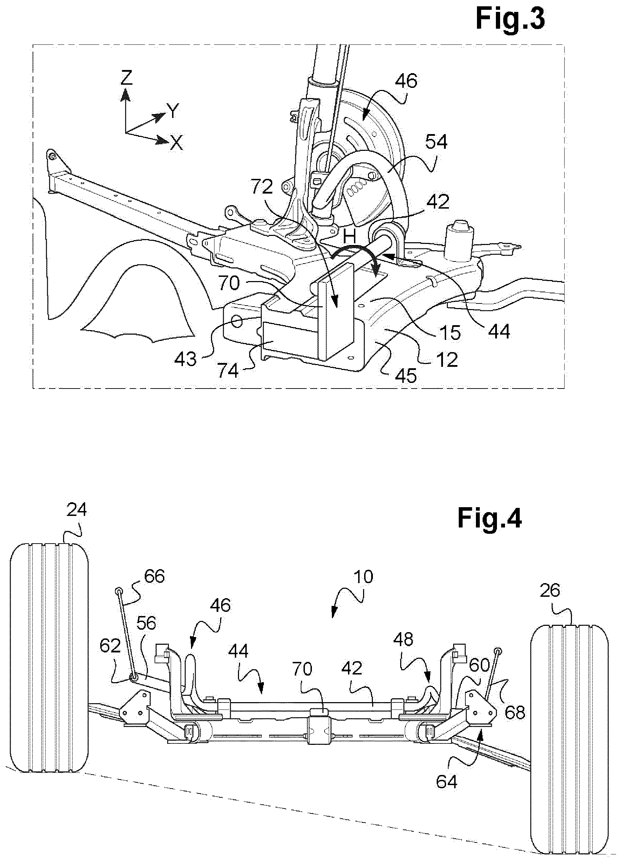

En outre, sur la [Fig. 1] apparaît conformément à l'invention, une patte 70 solidaire de la partie médiane 44 de la barre de torsion 42. La patte 70 est située sensiblement à équidistance des deux extrémités 46, 48 de la barre de torsion 42 et elle pénètre à travers la paroi supérieure 15 à l'intérieur du berceau 12 comme on va l'expliquer ci-après en regard de la [Fig. 3].

Ainsi, on retrouve en coupe sur la [Fig. 3], le berceau 12 et la partie médiane 44 de la barre de torsion 42, laquelle partie médiane 44 se prolonge par la première portion droite 54 de l'extrémité de barre droite 46.

On retrouve alors la patte 70 solidaire de la partie médiane 44 et qui s'étend selon une composante verticale à travers une lumière 72 pratiquée dans la paroi supérieure 15 du berceau 12. Ainsi, la patte 70 s'étend entre la paroi antérieure 43 et la paroi postérieure 45 du berceau 12, et plus proche de la paroi postérieure 45.

En outre, à l'intérieur du berceau 12, est installé un organe de rappel élastique 74 interposé entre la paroi antérieure 43 et la patte 70. L'organe de rappel élastique 74 est, selon un mode de mise en œuvre, un ressort hélicoïdal. Selon un autre mode de mise en œuvre, l'organe de rappel élastique 74 est réalisé dans un matériau polymère élastomère, par exemple du polyuréthane. Aussi, une combinaison d'un matériau polymère et un ressort hélicoïdal est envisagée.

On comprend ainsi, compte tenu des éléments décrits ci-dessus en regard de la [Fig. 3], que le mouvement de rotation de la barre de torsion 42 dans le sens horaire H, provoque le pivotement de la patte 70 à l'intérieur du berceau 12 vers la paroi antérieure 43. Et par conséquent, ce mouvement de rotation de la barre de torsion 42 provoque la compression de l'organe de rappel élastique 74. Ce dernier tend ainsi à s'opposer à cette rotation comme on va l'expliquer ci-après en référence à la [Fig. 1]. Ainsi, lorsque les roues droites 24 et gauche 26 du train de roue 10 accoste simultanément ou quasi-simultanément un dos d'âne par exemple, compte tenu de l'inertie du véhicule en mouvement rectiligne parallèlement à la surface de la route sur laquelle il circule, ces roues droites 24 et gauche 26 sont entraînées plus ou moins brusquement selon une composante verticale +Z, tandis que les deux jambes de force 28, 30 correspondantes se compriment axialement.

En conséquence, les deux biellettes droite 66 et gauche 68 exercent deux forces ascendantes respectivement sur les deux extrémités libres, droite 62, et gauche 64 des secondes portions droites 56 et gauche 60 des extrémités respectives 46, 48 de la barre de torsion 42.

Partant, la partie médiane 44 de la barre de torsion 42 est entraînée en rotation suivant le sens horaire H comme illustré sur la [Fig. 3] à laquelle on se reportera de nouveau. Ainsi, la patte 70 est entraînée en pivotement vers la paroi antérieure 43 du berceau 12 et par là-même, vient comprimer l'organe de rappel élastique 74. Ce dernier en ce comprimant, s'oppose au mouvement de pivotement de la patte 70. Partant, il absorbe le choc provoqué par l'accostage des deux roues 24, 26 du dos d'âne précité.

Ainsi, on peut s'affranchir des « butées de choc » usuellement mises en œuvre dans les trains de roue conventionnels.

En revanche, dans les situations telles qu'illustrées sur la [Fig. 4], où le train de roue 10 du véhicule est sollicité dans un dénivelé croisé, l'absence de « butées de choc » usuelles, permet une amplitude de débattement des roues plus importante.

On retrouve ainsi le train de roue 10, tel que décrit en regard de la [Fig. 1] dans une situation où la roue droite 24 est entraînée verticalement selon la composante verticale ascendante +Z, tandis qu'à l'inverse, la roue gauche 26 est entraînée verticalement selon la composante descendante -Z. Une telle situation survient, lorsqu'à l'inverse le train de roue arrière, non représenté, est incliné à l'opposé, autrement dit, lorsque la roue arrière droite est abaissée, tandis que la roue arrière gauche est relevée. Autrement dit, les deux trains de roue sont inclinés dans des directions opposées, cette situation est qualifiée de : « croisement de pont ».

En conséquence, la jambe de force droite 28 non représentée sur la [Fig. 4] est comprimée au maximum, sans être empêchée par une « butée de choc », et partant, elle entraîne selon une amplitude maximale, l'extrémité libre droite 62 de la seconde portion droite 56 de l'extrémité de barre droite 46 par l'intermédiaire de la biellette droite 66 selon la composante verticale ascendante +Z.

À l'inverse, la roue gauche 26 est entraînée verticalement selon la composante verticale descendante -Z. En conséquence, la jambe de force gauche 30 non représentée sur la [Fig. 4] est en extension maximale, et elle entraîne selon une amplitude maximale, l'extrémité libre gauche 64 de la seconde portion gauche 60 de l'extrémité de barre gauche 48 par l'intermédiaire de la biellette gauche 68 selon la composante verticale descendante -Z.

En conséquence, la barre de torsion 42 est précisément entraînée en torsion, et joue son rôle de rappel élastique. En revanche, la portion de partie médiane 44 dont est solidaire la patte 70, laquelle portion est située sensiblement à équidistance des deux extrémités droite 46 et gauche 48 de la barre de torsion 42, est neutre. Partant, elle demeure en position fixe et la patte 70 n'est pas entraînée en pivotement.

De la sorte, l'amplitude de débattement des deux roues 24, 26 est plus importante qu'elle ne l'est lorsque les jambes de force sont équipées de « butées de choc » usuelles.

## Revendications

1. Train de roue (10) de véhicule automobile comprenant :
- un berceau (12) présentant deux extrémités de berceau opposées (14, 16) ;
- deux supports de roue (21, 23) respectivement reliés auxdites deux extrémités de berceau (46, 48) et adaptés à recevoir chacun une roue (24, 26) ;
- deux jambes de force (28, 30) surmontant respectivement lesdits deux supports de roue (21, 23) et adaptées à être comprimées lorsque lesdits support de roue sont entraînés en mouvement par rapport à audit berceau (12) ;
- une barre de torsion (42) présentant une partie médiane rectiligne (44) et deux extrémités de barre opposées (46, 48) coudées et symétriques l'une de l'autre, ladite partie médiane (44) étant installée mobile en rotation le long dudit berceau (12), tandis que lesdites deux extrémités de barre opposées (46, 48) sont respectivement reliées auxdites jambes de force (28, 30) ;
**caractérisé en ce que** ledit berceau (12) comprend en outre un organe de rappel élastique (74) situé entre lesdites deux extrémités de berceau (14, 16) ;
et **en ce que** ladite partie médiane (44) de ladite barre de torsion (42) comprend une patte (70) adaptée à coopérer avec ledit organe de rappel élastique (74) pour amortir le mouvement simultané desdits supports de roue (21, 23) par rapport audit berceau (12).

2. Train de roue selon la revendication 1, **caractérisé en ce que** ledit organe de rappel élastique (74) est situé sensiblement à équidistance desdites deux extrémités de berceau (14, 16).

3. Train de roue selon la revendication 1 ou 2, **caractérisé en ce que** ledit berceau (12) est équipé de deux paliers (50, 52) espacés l'un de l'autre pour recevoir ladite partie médiane (44) de ladite barre de torsion (42).

4. Train de roue selon l'une quelconque des revendications 1 à 3, **caractérisé en ce que** ledit berceau (12) est creux pour recevoir ledit organe de rappel élastique (74), et **en ce qu'**elle présente en outre une ouverture (72) au droit dudit organe de rappel élastique (74) pour autoriser le passage de ladite patte (70).

5. Train de roue selon l'une quelconque des revendications 1 à 4, **caractérisé en ce que** chacune desdites deux extrémités de barre opposées (46, 48) présente une première portion (54, 58) coudée par rapport à ladite partie médiane (44) et une seconde portion (56, 60) coudée par rapport à ladite première portion (54, 58) en formant manivelle.

6. Train de roue selon la revendication 5, **caractérisé en ce que** chacune des premières portions (54, 58) est courbée dans un plan sensiblement perpendiculaire à ladite partie médiane (44).

7. Train de roue selon l'une quelconque des revendications 1 à 6, **caractérisé en ce que** lesdits deux supports de roue (21, 23) sont respectivement reliés auxdites deux extrémités de berceau (14, 16) par des bras de suspensions (18, 20).

8. Véhicule automobile présentant une partie avant et une partie arrière, **caractérisé en ce que** chacune desdites parties avant et arrière est équipée d'un train de roue (10) selon l'une quelconque des revendications 1 à 7.

## Patentansprüche

1. Radanordnung (10) für ein Kraftfahrzeug, umfassend:
- einen Hilfsrahmen (12), der zwei gegenüberliegende Hilfsrahmenenden (14, 16) aufweist;
- zwei Radträger (21, 23), die jeweils mit den beiden Hilfsrahmenenden (46, 48) verbunden und jeweils zur Aufnahme eines Rades (24, 26) geeignet sind;
- zwei Federbeine (28, 30), welche die beiden Radträger (21, 23) jeweils überragen und dazu geeignet sind, zusammengedrückt zu werden, wenn die Radträger relativ zu dem Hilfsrahmen (12) in Bewegung versetzt werden;
- einen Torsionsstab (42), der einen geradlinigen mittleren Abschnitt (44) und zwei gegenüberliegende Stabenden (46, 48) aufweist, die abgewinkelt und zueinander symmetrisch sind, wobei der mittlere Abschnitt (44) entlang des Hilfsrahmens (12) drehbeweglich angebracht ist, während die beiden gegenüberliegenden Stabenden (46, 48) jeweils mit den Federbeinen (28, 30) verbunden sind;
**dadurch gekennzeichnet, dass** der Hilfsrahmen (12) ferner ein elastisches Rückstellelement (74) umfasst, das zwischen den beiden Hilfsrahmenenden (14, 16) angeordnet ist;
und dass der mittlere Abschnitt (44) des Torsionsstabs (42) eine Lasche (70) umfasst, die dazu geeignet ist, mit dem elastischen Rückstellelement (74) zusammenzuwirken, um die gleichzeitige Bewegung der Radträger (21, 23) relativ zu dem Hilfsrahmen (12) zu dämpfen.

2. Radanordnung nach Anspruch 1, **dadurch gekennzeichnet, dass** das elastische Rückstellelement (74) im Wesentlichen gleich weit von den beiden Hilfsrahmenenden (14, 16) entfernt angeordnet ist.

3. Radanordnung nach Anspruch 1 oder 2, **dadurch gekennzeichnet, dass** der Hilfsrahmen (12) mit zwei voneinander beabstandeten Lagern (50, 52) zur Aufnahme des mittleren Abschnitts (44) des Torsionsstabs (42) ausgestattet ist.

4. Radanordnung nach einem der Ansprüche 1 bis 3, **dadurch gekennzeichnet, dass** der Hilfsrahmen (12) zur Aufnahme des elastischen Rückstellelements (74) hohl ist und ferner auf Höhe des elastischen Rückstellelements (74) eine Öffnung (72) aufweist, um den Durchtritt der Lasche (70) zu ermöglichen.

5. Radanordnung nach einem der Ansprüche 1 bis 4, **dadurch gekennzeichnet, dass** jedes der beiden gegenüberliegenden Stabenden (46, 48) einen ersten Abschnitt (54, 58), der gegenüber dem mittleren Abschnitt (44) abgewinkelt ist, und einen zweiten Abschnitt (56, 60), der gegenüber dem ersten Abschnitt (54, 58) abgewinkelt ist, aufweist, wodurch eine Kurbel gebildet wird.

6. Radanordnung nach Anspruch 5, **dadurch gekennzeichnet, dass** jeder der ersten Abschnitte (54, 58) in einer Ebene gekrümmt ist, die im Wesentlichen senkrecht zu dem mittleren Abschnitt (44) verläuft.

7. Radanordnung nach einem der Ansprüche 1 bis 6, **dadurch gekennzeichnet, dass** die beiden Radträger (21, 23) jeweils über Aufhängungsarme (18, 20) mit den beiden Hilfsrahmenenden (14, 16) verbunden sind.

8. Kraftfahrzeug mit einem vorderen Teil und einem hinteren Teil, **dadurch gekennzeichnet, dass** sowohl der vordere Teil als auch der hintere Teil mit einer Radanordnung (10) nach einem der Ansprüche 1 bis 7 ausgestattet ist.

## Claims

1. Wheel assembly (10) for a motor vehicle, comprising:
- a cradle (12) having two opposite cradle ends (14, 16);
- two wheel supports (21, 23) respectively connected to said two cradle ends (46, 48) and each adapted to receive a wheel (24, 26);
- two struts (28, 30) respectively surmounting said two wheel supports (21, 23) and adapted to be compressed when said wheel supports are driven in movement relative to said cradle (12);
- a torsion bar (42) having a rectilinear middle portion (44) and two opposite bar ends (46, 48) which are bent and symmetrical to one another, said middle portion (44) being mounted rotatably along said cradle (12), while said two opposite bar ends (46, 48) are respectively connected to said struts (28, 30);
**characterised in that** said cradle (12) further comprises an elastic return member (74) located between said two cradle ends (14, 16);
and **in that** said middle portion (44) of said torsion bar (42) comprises a lug (70) adapted to cooperate with said elastic return member (74) in order to damp the simultaneous movement of said wheel supports (21, 23) relative to said cradle (12).

2. Wheel assembly according to claim 1, **characterised in that** said elastic return member (74) is located substantially equidistant from said two cradle ends (14, 16).

3. Wheel assembly according to claim 1 or 2, **characterised in that** said cradle (12) is equipped with two bearings (50, 52) spaced apart from one another for receiving said middle portion (44) of said torsion bar (42).

4. Wheel assembly according to any one of claims 1 to 3, **characterised in that** said cradle (12) is hollow for receiving said elastic return member (74), and **in that** it further has an opening (72) opposite said elastic return member (74) to allow said lug (70) to pass therethrough.

5. Wheel assembly according to any one of claims 1 to 4, **characterised in that** each of said two opposite bar ends (46, 48) has a first portion (54, 58) bent relative to said middle portion (44) and a second portion (56, 60) bent relative to said first portion (54, 58), thereby forming a crank.

6. Wheel assembly according to claim 5, **characterised in that** each of the first portions (54, 58) is curved in a plane substantially perpendicular to said middle portion (44).

7. Wheel assembly according to any one of claims 1 to 6, **characterised in that** said two wheel supports (21, 23) are respectively connected to said two cradle ends (14, 16) by suspension arms (18, 20).

8. Motor vehicle having a front part and a rear part, **characterised in that** each of said front and rear parts is equipped with a wheel assembly (10) according to any one of claims 1 to 7.
